# EUROPEAN PATENT APPLICATION

(11) **EP 1 617 665 A2**
(43) Date of publication of application: **18.01.2006**
(21) Application number: 05013881.7
(22) Date of filing: 28.06.2005
(51) Int. Cl.: H04N 7/16, H04N 7/08

(54) **Emergency alert signaling method, data structure for emergency alert message, and cable TV receiver**

(30) Priority: 16.07.2004 KR 2004055552
(71) Applicant: LG ELECTRONICS INC., Seoul (KR)
(72) Inventor: Yun, Chang Sik, Seo-gu, Daejeon (KR)
(74) Representative: Zech, Stefan Markus

(57) **Abstract**

A cable broadcast signal includes an emergency alert message to be used by a cable TV system. The emergency alert message includes an alert priority and one or more alert region information sets which define one or more regions affected by the emergency alert message, respectively. Each region information includes a first country code identifying a country and a first local region code defining a local region within the identified country. The cable TV system processes the emergency alert message based upon comparing each alert region information with system region information preset to the cable TV system.

## Description

This application claims the benefit of the Korean Patent Application No. 10-2004-0055552, filed on July 16, 2004, which is hereby incorporated by reference.

### BACKGROUND OF THE INVENTION

### Field of the Invention

The present invention relates to a digital cable TV receiver, and more particularly, to an emergency alert processing method, a data structure for an emergency alert message in the digital cable TV receiver.

### Discussion of the Related Art

Generally, the digital cable TV receiver standards are categorized into European Type and U.S. Type. In Korea, the U.S. type Open Cable has been finally and officially confirmed by Technology Standard Revision Announcement for Cable Broadcasting Stations (Ministry of Information and Communication Notice No. 2003-41), September, 2009.

An open cable type broadcast receiver is a system that separates a POD (point of deployment) module including a conditional access (CA) system from a body of a digital cable set-top box for the copy prevention and conditional access to valuable broadcast contents. Thus, the open cable type broadcast receiver provides an easy replacement function of a security system and enables a retail sale, whereby low-price digital cable broadcast receivers (or cable TV receivers) can be supplied. The POD module uses a PCMCIA card to be loaded in a slot of the digital cable set-top box for instance. Hence, the POD module is occasionally called a cable card. And, the POD module and the cable card will be used without distinction in the following description.

A receiver capable of receiving cable broadcasting has a basic interface protocol of receiving to process an emergency alert message transmitted from a transmitting side to prepare for an emergency situation. Namely, it is regulated in the basic interface protocol that an emergency alert message transmitted by a cable service provider can be handled via TV screen or audio announcement to prepare for emergency situations such as tornado, blizzard, hurricane, flood, etc. As an such interface example, there are SCTE(Society of Cable Telecommunication Engineers) 18 and so forth.

Disclosed in the basic emergency alert message standard is that in case of receiving an emergency alert message transmitted via a specific terrestrial or cable frequency, the information for channel change to a specific terrestrial or cable channel and for emergency alert has to be outputted to effectively provide TV viewers with the information for the emergency alert. After the emergency alert situation has ended, the specific channel should be changed into the previous channel the user previously watched. In this case, the emergency alert message contains an area code to handle an emergency alert message corresponding to a resident area only.

In the U.S.A., for example, the area code includes codes indicating local areas within the U.S.A. Since the emergency alert message contains not a country code but the area codes, the following problems may occur. A cable service provider, which is located in the vicinity of the U.S.A and of which service area covers the U.S.A and its neighbor country, may be unable to handle an emergency alert message corresponding to a specific country only. For instance, a cable service provide, of which service area including the U.S.A. covers Mexico or Canada, is unable to transmit the emergency alert message designated to a specific country.

Specifically, if the emergency alert message is adopted by European digital cable broadcasting standard, such a problem becomes more serious because a cable service provider usually provides services to various countries neighboring with each other in Europe. And, although necessity for delivering the emergency alert message to at least two specific countries simultaneously is demanded, the related art emergency alert message is not prepared for handling such a delivery.

### SUMMARY OF THE INVENTION

Accordingly, the present invention is directed to an emergency alert signaling method, a data structure for an emergency alert message, and a cable TV receiver that substantially obviate one or more problems due to limitations and disadvantages of the related art.

An object of the present invention is to provide an emergency alert signaling method and a data structure for an emergency alert message, by which country identification is enabled by including a country code in an emergency alert message.

Another object of the present invention is to provide an emergency alert signaling method and a cable TV receiver, in which an emergency alert message including a country code therein is received and processed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an Emergency Alert (EA) signaling method for use by a cable TV system includes identifying an emergency alert message included in a cable broadcast signal, the emergency alert message comprising an alert priority and at least one alert region information which defines at least one region affected by the emergency alert message, each alert region information comprising a first country code identifying a country and a first local region code defining a local region within the identified country, and processing the emergency alert message based upon comparing each alert region information with system region information preset to the cable TV system. Herein, the processing the emergency alert message may include determining whether the first country code conforms to a second country code included in the system region information, determining whether the first local region code conforms to a second local region code included in the system region information, and processing the emergency alert message according to the alert priority when the first country and local region codes conform to the second country and local codes.

In another aspect of the present invention, an Emergency Alert (EA) signaling method for use by a cable TV system includes identifying an emergency alert message included in a cable broadcast signal, the emergency alert message comprising an alert priority and at least one alert region information which defines at least one region affected by the emergency alert message, each alert region information comprising a first country code identifying a country, a first state code defining a state within the country, a first county subdivision defining a county subdivision within the state, and a first county code defining a county within the county subdivision, determining whether the first country code conforms to a second country code included in system region information preset to the cable TV system, determining whether the first state code conforms to a second state code included in the system region information, determining whether the first county subdivision conforms to a second county subdivision included in the system region information, determining whether the first county code conforms to a second county code included in the system region information, and processing the emergency alert message according to the alert priority when the first country code, state code, county subdivision, and county code conform to the second country code, state code, county subdivision, and county code, respectively.

In another aspect of the present invention, a data structure for an emergency alert message for use by a cable TV system includes an alert priority based on which the cable TV system processes the emergency alert message, and at least one alert region information defining at least one region affected by the emergency alert message, each alert region information comprising a country code identifying a country. Each alert region information may further include a state code defining a state within the country defined by the country code, a county subdivision defining a county subdivision within the state defmed by the state code, and a county code defining a county within the county subdivision defined by county subdivision.

In a further aspect of the present invention, a cable TV receiver includes a memory, a signal receiving unit configured to receive a cable broadcast signal including an emergency alert message and to store the emergency alert message in the memory, the stored emergency alert message comprising an alert priority and at least one alert region information defining at least one region affected by the emergency alert message, each alert region information comprising a first country code identifying a country and a first local region code defining a local region within the country, and a controller configured to process the emergency alert message based upon comparing each alert region information with preset system region information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram of an emergency alert message format of a digital cable TV according to the present invention;

FIG. 2 is a block diagram of a digital cable TV having a POD module loaded therein;

FIG. 3 is a block diagram of a digital cable TV having a POD module not loaded therein; and

FIG. 4 is a flowchart of an emergency alert message processing method according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Besides, the terms used in the present invention are mainly selected from currently usable global and general terms. Yet, most appropriate terms are arbitrarily used by the applicant to keep up with the appearance of new technologies. And, the meanings of the arbitrarily used terms will be clearly explained in the corresponding description. Hence, in apprehending the present invention, the present invention should be understood not by the simple names of the terms but by the meanings of the terms.

First of all, the present invention is characterized in that an emergency alert message includes a country code indicating that the corresponding emergency alert message belongs to a specific country. And, the country code indicating the specific country can indicate not only the specific country but also a group of several countries. In this case, the emergency alert message is made applicable to the entire countries belonging to the country group. For instance, the emergency alert message is made applicable to European Union countries, East Asian Countries, South American countries or the like collectively. As mentioned in the above description, the present invention adds a country code to an area code. Hence, in case of delivering an emergency alert message to a specific country, a cable service provider can deliver the emergency alert message to the specific country by designating the country code to the specific country.

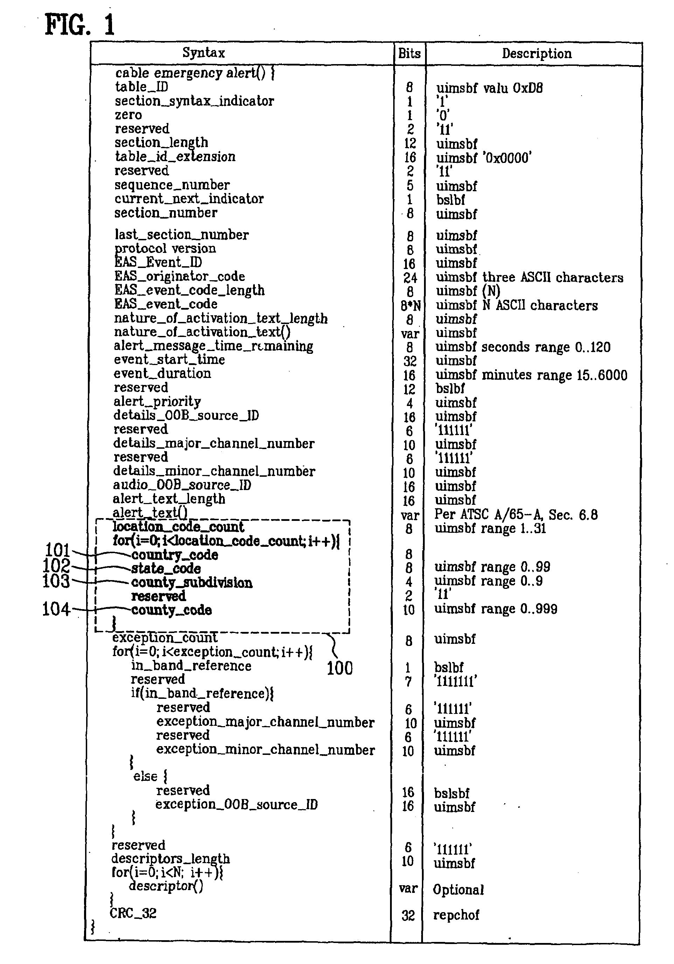

FIG. 1 is a diagram of a general emergency alert message to which the present invention is applicable. Referring to FIG. 1, a country_code field is allocated in front of a state_code within ' for' repetition statement including a location code. In the present invention, the ' for' repetition statement 100 of an emergency alert message in FIG. 1, which repeatedly executed as many as a count of locations to which an emergency alert message is intended to be sent, is explained as follows.

Eight bits are allocated to a location_code_count field 101 to indicate a count of locations to which an emergency alert message is intended to be delivered. Hence, a following' for' repetition statement is repeatedly executed as many as a value of the location_code_count field, i.e., a count of locations to which the emergency alert message is intended to be delivered. A country_code field 101 within the ' for' repetition statement is a country code added by the present invention. And, eight bits are allocated to the country_code field 101 for example. The 8-bit country_code field 101 can represent 256 countries theoretically, which is enough to specify about 210 to 220 currently existing countries. The eight bits allocated to the country_code field 101 is just exemplary. And, the bits allocated to the country_code field 101 can be more or less than eight bits according to a designer' s selection.

A state_code field 102, a county_subdivision field 103 and a county_code field 104 are sequentially allocated behind the country_code field 101 to indicate location codes. The location code is set to a code value that can represent location identification smaller than a country unit so that the emergency alert message can be delivered thereto. Values set for the state_code field 102, the county_subdivision field 103 and the county_code field 104 are appropriately set according to an administrative district of a corresponding country. In this case, units of the administrative district are decided in a sequence of the state_code field 102, the county_subdivision field 103 and the county_code field 104. Namely, the administrative district is narrowed in the sequence of the state_code field 102, the county_subdivision field 103 and the county_code field 104 and a code value directing the corresponding district is set. Hence, a location to which the emergency alert message is attempted to be delivered can be specified. In other words, to represent a location below a country unit, the state_code field 102, the county_subdivision field 103 and the county_code field 104 are previously set according to the administrative district division.

The division of the U.S.A taken as an example is explained as follows. First of all, the country_code field of the emergency alert message is set to the U.S.A and the state_code field 102 is set to a value indicating a state to which the emergency alert message will be delivered. The state_code 102 is decided according to a code of State and Territory Federal Institute Processing Standard. If the country_code field 101 is set to 0, this indicates that the cable TV receiver receiving the emergency alert message must signal (or process) an emergency alert message without exception (i.e., unconditionally). For example, when the emergency alert message is received simultaneously in the United States and Canada, the emergency message should be signaled (or processed) both in the United States and Canada. Also, when the state_code field 102 is set to 0, this indicates that an emergency message should be transmitted to the entire country indicated by the country_code field 101. For example, when the country_code field 101 designates the United States, the emergency message corresponds to a national level alert that is transmitted nationwide throughout the United States (i.e., all 50 states of America).

Four bits are allocated to the county_subdivision field 103 which is set to a value indicating an azimuth of the state belonging to the state_code field 102 such as Northwest area, Mid-north area, Northeast area, Mid-west area, Central area, Central East area, South west area, Mid-south area, Southeast area and the like. Namely, the county_subdivision field 103 is set to a code value indicating a location smaller than the location division represented by the state_code field 102. And, ten bits are allocated to the county_code 104 and is used for designating a specific county according to the State and Territory FIPS.

Similarly, when the county_subdivision field 103 is set to 0, this indicates that the alert message is an emergency alert message that is to be transmitted to an entire administrative district designated by the state_code field 102. For example, when the country_code field 101 designates the United States and the state_code field 102 designates the state of New York, the emergency alert message should be transmitted to the entire state of New York. When the county_code field 104 is set to 0, this indicates that the alert message is an emergency alert message that is to be transmitted to an entire administrative district designated by the county_subdivision field 102. For example, when the country_code field 101 designates the United States and the state_code field 102 designates the state of New York and the county_subdivision field 103 designates the north-western district, the emergency alert message should be transmitted to the entire north-wester district of the state of New York.

For another example, it is assumed that an emergency alert message is attempted to be delivered to a digital cable TV at a location, Yeoksam-Dong, Kangnam-Ku, Seoul, Korea. In this case, the country_code field 101, the state_code field 102, the county_subdivision field 103 and the county_code field 104 are set to code values indicating Korea, Seoul, Kangnam-Ku and Yeoksam-Dong, respectively. Thus, it is able to allow the emergency alert message to be processed by the digital cable TV at the specific area within Korea.

As mentioned in the above description, the country_code field 101 for designating a specific country can be made to designate a group of countries for which a predetermined code is set, so that an emergency alert message is applicable to all countries belonging to a specific group. Namely, a reserved code value among values available for the country_code field 101 is usable in designating a specific group of countries. For instance, two hundred fifty-five values (8 bits) can be set for the country_code field 101. Assuming that two hundred fifty values are substantially used for the country_code field, ' 251' can be used as a value for designating the entire countries of European Union. Namely, if the country_code value of the emergency alert message is set to 251, the emergency alert message should be delivered to the entire countries of European Union.

Thus, if a value of the country_code field 101 is set for a specific group of countries such as the entire countries of European Union, East Asian Countries, South American Countries and the like, the emergency alert message can be collectively applicable to the corresponding countries. By adding the country_code field 101 for indicating a country to the emergency alert message, a cable service provider servicing at least two countries at the same time can deliver an emergency alert message to a specific country or the at least two countries simultaneously.

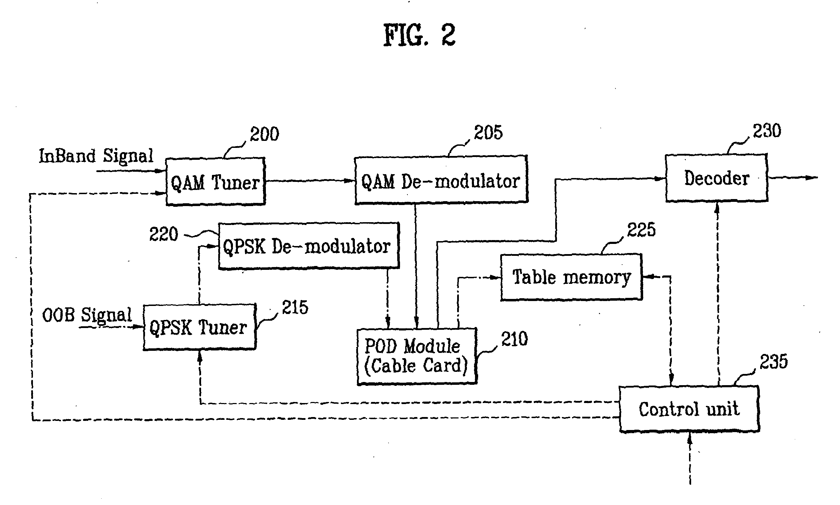

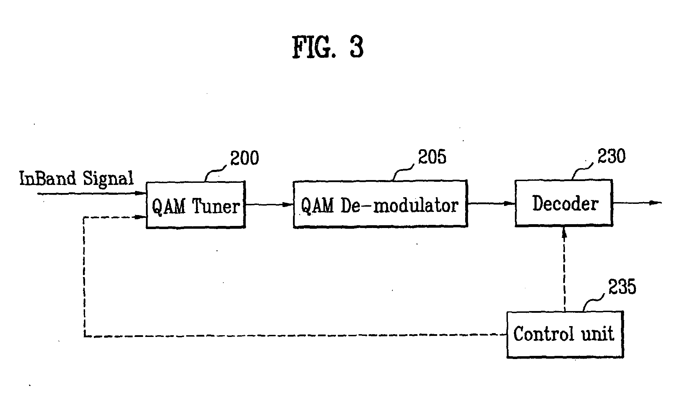

FIG. 2 is a block diagram of a digital cable TV having a POD module loaded therein and FIG. 3 is a block diagram of a digital cable TV having a POD module not loaded therein according to the present invention. The emergency alert message can be transmitted via OOB (out-of-band) or in-band. In this case, the digital cable TV receives the emergency alert message transmitted via OOB if a POD module is loaded therein or receives the emergency alert message transmitted via in-band if the POD module is not loaded therein. An emergency alert message processing method is explained with reference to FIG. 2 and FIG. 3 as follows.

In case that the POD module, as shown in FIG. 2, is loaded, the emergency alert message received via OOB is processed. Specifically, a broadcast program or service data (program and system information protocol: PSIP) received via in-band is tuned and demodulated via a tuner 200 and a demodulator 205 to be outputted to a POD module 210. If the received broadcast program is a signal modulated by QAM (quadrature amplitude modulation), demodulation is performed by QAM. If the broadcast program demodulated by the demodulator 205 is scrambled, the POD module 210 descrambles the program through subscriber confirmation and the like and then outputs the descrambled signal to a decoder 230. And, the POD module 210 parses data information to store a corresponding result in a table memory 225. A control unit 235 controls a decoding of the demodulated A/V broadcast signal using information stored in the table memory 225.

The decoder 230 separates the signal inputted via the POD module 210 into an audio signal and a video signal by a control of the control unit 235 and then decodes the audio and video signals. For instance, the compression-coded video signal is decoded by a reverse process of coding to be restored to an original video signal and the compression-coded audio signal is decoded by a reverse process of coding to be restored to an original audio signal. Meanwhile, data information such as an emergency alert message transmitted via OOB, channel & program guide information (service information: SI) is tuned and demodulated via a tuner 215 and a demodulator 220 to be outputted to the POD module 210. In this case, since QPSK (quadrature phase shift keying) transmission is used in case of OOB, the demodulator 220 demodulates the tuned signal by QPSK.

The POD module 210 analyzes the SI received via OOB and reads table information for processing the emergency alert message and then stores the table information in the table memory 225. The table information includes information of a location code indicating a location for which the emergency alert message has to be processed, information of a channel to which a current channel should be switched in case of reception of the emergency alert message and the like. The control unit 235 checks whether the received emergency alert message is a message corresponding to a place of residence of a viewer who is watching the digital cable TV using the table information stored in the table memory 225. If the emergency alert message corresponds to the viewer' s place of residence, the control unit 235 controls the tuner 200 to forcibly tune the channel of emergency alert broadcasting.

Referring to FIG. 3, if a POD module is not loaded in a digital cable TV, a signal cannot be received via OOB. Hence, an emergency alert message as well as a broadcast program is received via in-band. In this case, the broadcast program is tuned and demodulated via a tuner 200 and a demodulator 205 and is then inputted to a decoder 230 to be decoded. A control unit 235 checks whether the emergency alert message is a message corresponding to a place of residence of a viewer using a location code of the emergency alert message received via in-band. If the emergency alert message corresponds to the viewer' s place of residence, the control unit 235 controls the tuner 200 to forcibly tune the channel of emergency alert broadcasting.

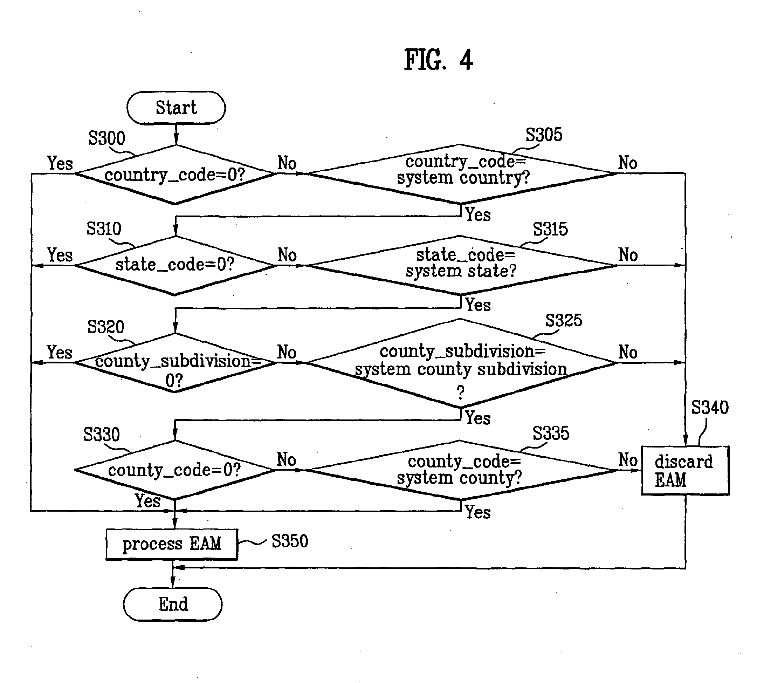

FIG. 4 is a flowchart of an emergency alert message processing method according to the present invention, in which an emergency message is applied to U.S.A. Referring to FIG. 4, when an emergency alert message is received, among the area codes, the country_code field 101 indicating a specific country is verified as to whether the field value is set to 0 (S300). In Step 300, when the country_code field 101 is set to 0, the emergency alert message should be transmitted in disregard of the area (or location), and so the emergency alert message is signaled (or processed) accordingly (S350). Alternatively, in Step 300, when the country_code field 101 is not set to 0, the country_code field 101 included in the received emergency alert message is verified as to whether its value is identical to the country pre-set in the user system (S305). In Step 305, when the country_code field 101 value is not identical to the country pre-set in the user system, this indicates that the received emergency alert message does not correspond to the country pre-set in the user system. Therefore, the received emergency alert message is annulled (or cancelled) (S340). Alternatively, in Step 305, when the country_code field 101 value is identical to the country pre-set in the user system, the state_code field 102 is verified as to whether its value is set to 0 (S310).

In Step 310, when the state_code field 102 is set to 0, the emergency alert message should be transmitted to the entire country designated by the country_code field 101, and so the received emergency alert message is signaled (or processed) accordingly (S350). Alternatively, in Step 310, when the state_code field 102 is not set to 0, the state_code field 102 included in the received emergency alert message is verified as to whether its value is identical to the state pre-set in the user system (S315). In Step 315, when the state_code field 102 value is not identical to the state pre-set in the user system, this indicates that the received emergency alert message does not correspond to the state pre-set in the user system. Therefore, the received emergency alert message is annulled (or cancelled) (S340). Alternatively, in Step 315, when the state_code field 102 value is identical to the state pre-set in the user system, the county_subdivision field 103 is verified as to whether its value is set to 0 (S320).

In Step 320, when the county_subdivision field 103 is set to 0, the emergency alert message should be transmitted to the entire state designated by the state_code field 102, and so the received emergency alert message is signaled (or processed) accordingly (S350). Alternatively, in Step 320, when the county_subdivision field 103 is not set to 0, the county_subdivision field 103 included in the received emergency alert message is verified as to whether its value is identical to the county subdivision pre-set in the user system (S325). In Step 325, when the county_subdivision field 103 value is not identical to the county subdivision pre-set in the user system, this indicates that the received emergency alert message does not correspond to the county subdivision pre-set in the user system. Therefore, the received emergency alert message is annulled (or cancelled) (S340). Alternatively, in Step 325, when the county_subdivision field 103 value is identical to the county subdivision pre-set in the user system, the county_code field 104 is verified as to whether its value is set to 0 (S330).

In Step 330, when the county_code field 104 is set to 0, the emergency alert message should be transmitted to the entire county subdivision designated by the county_subdivision field 103, and so the received emergency alert message is signaled (or processed) accordingly (S350). Alternatively, in Step 330, when the county_code field 104 is not set to 0, the county_code field 104 included in the received emergency alert message is verified as to whether its value is identical to the county pre-set in the user system (S335). In Step 335, when the county_code field 104 value is not identical to the county pre-set in the user system, this indicates that the received emergency alert message does not correspond to the county pre-set in the user system. Therefore, the received emergency alert message is annulled (or cancelled) (S340).

Alternatively, in Step 335, when the county_code field 104 value is identical to the county pre-set in the user system, the received emergency alert is determined to be applied to the county pre-set in the user system, and so the emergency alert message is signaled (or processed) accordingly (S350). More specifically, processing such as forcibly changing to a channel through which the emergency alert message is broadcasted can be performed in accordance with the area (or location) code within the received emergency alert message and the value of the alert priority (alert_priority) field, which determines the signaling (or processing) of the emergency alert message. Specific details on signaling (or processing) the emergency alert message are regulated in the basic emergency alert message standard and a detailed description of the same will be omitted herein.

In brief, if the digital cable TV receives the emergency alert message, the control unit confirms whether the received emergency alert message corresponds to a digital cable TV subscriber' s resident location from the location code of the emergency alert message and then decides whether to process the emergency alert message.

In the above-explained embodiment of the present invention, the emergency alert signaling method is described by taking the U.S.A. as an example. In other countries, the present invention is also applicable in a manner of giving code values to the country_code, state_code, county_subdivision and county_code fields by dividing a wide area into small areas to be suitable administrative districts of each country and processing the emergency alert message selectively for the viewers resident at a specific location of a specific country only.

Accordingly, the present invention includes the country code in the emergency alert message, thereby allowing the emergency alert message to be processed in a digital cable TV of a specific country. And, the standard of the emergency alert message is currently defined with the U.S.A. only. In case that the emergency alert message is globally used as the standard of many countries, the present invention can allow viewers of a specific country to process the emergency alert message of a specific country only by using the country code.

It will be apparent to those skilled in the art that various modifications and variations can be made in the present invention. Thus, it is intended that the present invention covers the modifications and variations of this invention provided they come within the scope of the appended claims and their equivalents.

## Claims

1. An Emergency Alert (EA) signaling method for use by a cable TV system, the method comprising:
identifying an emergency alert message included in a cable broadcast signal, the emergency alert message comprising an alert priority and at least one alert region information which defines at least one region affected by the emergency alert message, each alert region information comprising a first country code identifying a country and a first local region code defining a local region within the identified country; and
processing the emergency alert message based upon comparing each alert region information with system region information preset to the cable TV system.

2. The method of claim 1, wherein the processing the emergency alert message comprises:
determining whether the first country code conforms to a second country code included in the system region information;
determining whether the first local region code conforms to a second local region code included in the system region information; and
processing the emergency alert message according to the alert priority when the first country and local region codes conform to the second country and local codes.

3. The method of claim 1, wherein the processing the emergency alert message comprises:
determining whether the first country code conforms to a predetermined value indicating all countries; and
processing the emergency alert message based on the alert priority in disregard of the first local region code when the first country code conforms to the predetermined value.

4. The method of claim 3, wherein the predetermined value is 0.

5. The method of claim 1, wherein the processing the emergency alert message comprises:
determining whether the first country code conforms to a predetermined value indicating all countries;
determining whether the first country code conforms to a second country code included in the system region information; and
discarding the emergency alert message when the first country code does not conform to any one of the predetermined value and the second country code.

6. The method of claim 1, wherein the processing the emergency alert message comprises:
determining whether the first country code conforms to a second country code included in the system region information;
determining whether the first local region code conforms to a predetermined value indicating all local regions; and
processing the emergency alert message based on the alert priority when the first country code conforms to the second country code and the first local region code conforms to the predetermined value.

7. The method of claim 6, wherein the predetermined value is 0.

8. The method of claim 1, wherein the processing the emergency alert message comprises:
determining whether the first country code conforms to a second country code included in the system region information;
determining whether the first local region code conforms to a second predetermined value indicating all local regions;
determining whether the first local region code conforms to a second local region code included in the system region information; and
discarding the emergency alert message when the first country code conforms to the second country code and the first local region code does not conform to any one of the second predetermined value and the second local region code.

9. The method of claim 1, wherein the alert region information comprises a second local region code which defines a region within the local region defined by the first local region code.

10. The method of claim 9, wherein the alert region information further comprises a third local region code which defines a region within the region defined by the second local region code.

11. An Emergency Alert (EA) signaling method for use by a cable TV system, the method comprising:
identifying an emergency alert message included in a cable broadcast signal, the emergency alert message comprising an alert priority and at least one alert region information which defines at least one region affected by the emergency alert message, each alert region information comprising a first country code identifying a country, a first state code defining a state within the country, a first county subdivision defining a county subdivision within the state, and a first county code defining a county within the county subdivision;
determining whether the first country code conforms to a second country code included in system region information preset to the cable TV system;
determining whether the first state code conforms to a second state code included in the system region information;
determining whether the first county subdivision conforms to a second county subdivision included in the system region information;
determining whether the first county code conforms to a second county code included in the system region information; and
processing the emergency alert message according to the alert priority when the first country code, state code, county subdivision, and county code conform to the second country code, state code, county subdivision, and county code, respectively.

12. The method of claim 11, further comprising processing the emergency alert message according to the alert priority in disregard of the first state code, county subdivision, and county code when the first country code conforms to a predetermined value indicating all countries.

13. The method of claim 11, further comprising processing the emergency alert message according to the alert priority in disregard of the first county subdivision and county code when the first country code conforms to the second country code and the first state code conforms to a predetermined value indicating all states.

14. The method of claim 11, further comprising processing the emergency alert message according to the alert priority in disregard of the first county code when the first country and state codes conform to the second country and state codes and the first county subdivision conforms to a predetermined value indicating all county subdivisions.

15. The method of claim 11, further comprising processing the emergency alert message according to the alert priority when the first country code, state code, and county subdivision conform to the second country code, state code, and county subdivision and the first county code conforms to a predetermined value indicating all counties.

16. A data structure for an emergency alert message for use by a cable TV system, the data structure comprising:
an alert priority based on which the cable TV system processes the emergency alert message; and
at least one alert region information defining at least one region affected by the emergency alert message, each alert region information comprising a country code identifying a country.

17. The data structure of claim 16, wherein the country code is set to a predetermined value to indicate all countries.

18. The data structure of claim 17, wherein the predetermined value is 0.

19. The data structure of claim 16, wherein the each alert region information further comprises a state code defining a state within the country defined by the country code.

20. The data structure of claim 19, wherein the state code is set to a predetermined value to indicate all states.

21. The data structure of claim 19, wherein the each alert region information further comprises a county subdivision defining a county subdivision within the state defined by the state code.

22. The data structure of claim 21, wherein the county subdivision is set to a predetermined value to indicate all county subdivisions.

23. The data structure of claim 21, wherein the each alert region information further comprises a county code defining a county within the county subdivision defined by county subdivision.

24. The data structure of claim 20, wherein the county code is set to a predetermined value to indicate all counties.

25. A cable TV receiver comprising:
a memory;
a signal receiving unit configured to receive a cable broadcast signal including an emergency alert message and to store the emergency alert message in the memory, the stored emergency alert message comprising an alert priority and at least one alert region information defining at least one region affected by the emergency alert message, each alert region information comprising a first country code identifying a country and a first local region code defining a local region within the country; and
a controller configured to process the emergency alert message based upon comparing each alert region information with preset system region information.

26. The cable TV receiver of claim 25, wherein the controller processes the emergency alert message according to the alert priority when the first country and local region codes conform to second country and local codes included in the system region information.

27. The cable TV receiver of claim 25, wherein the controller processes the emergency alert message according to the alert priority in disregard of the first local region code when the first country code conforms to a predetermined value indicating all countries.

28. The cable TV receiver of claim 25, wherein the controller discards the emergency alert message when the first country code does not conform to any one of a predetermined value indicating all countries and a second country code included in the system region information.
